# FASCICULE DE BREVET EUROPEEN

(11) **EP 2 127 933 B1**
(45) Date de publication et mention de la délivrance du brevet: **01.08.2012**
(21) Numéro de dépôt: 09305419.5
(22) Date de dépôt: 11.05.2009
(51) Int. Cl.: B60K 15/05

(54) **Agencement d'une trappe à carburant de véhicule automobile**
Anordnung einer Tankklappe für Kraftfahrzeug
Fuel door arrangement for an automobile

(30) Priorité: 23.05.2008 FR 0853375
(43) Date de publication de la demande: 02.12.2009
(73) Titulaire: Renault S.A.S., 92100 Boulogne-Billancourt (FR)
(72) Inventeur: Petra, Jean-Marc, 91140, VILLEBAN SUR YVETTE (FR); Simon, Marc, 93130, NOISY LE SEC (FR)

(56) Documents cités:
- DE-A1-102006 015 404
- JP-A- 2005 319 960
- TW-B- 252 190
- US-B1- 6 315 144

## Description

L'invention concerne un agencement d'une trappe à carburant de véhicule automobile, comprenant un bol formant une cavité, et une porte comportant une charnière formant un coude dont une première portion d'accrochage est montée pivotante autour d'un axe, la porte étant apte à occuper :
- une position fermée dans laquelle la porte occulte la cavité du bol et se trouve dans l'alignement d'un plan de carrosserie du véhicule, la charnière se trouvant alors à l'intérieur de la cavité, et,
- une position ouverte dans laquelle la cavité du bol est découverte, la première portion d'accrochage de la charnière se trouvant alors à l'intérieur de la cavité et étant en contact avec un rebord du bol,
   des moyens de rappel permettant l'ouverture de la porte et le plaquage de la porte en position fermée.

Dans les agencements de trappe à carburant du type ci-dessus, les moyens de rappel sont souvent dimensionnés de manière à garantir un plaquage de la porte en position fermée sur le bol de façon à assurer une bonne étanchéité et un bon alignement de la porte avec la carrosserie. Cependant, il en résulte alors une vitesse importante de l'ouverture de la porte risquant ainsi d'entraîner un rebond de la porte et générer des bruits qui peuvent avoir un impact négatif en matière de qualité perçue vis-à-vis du client.

On connaît par la publication EP-A-1281558 un agencement de trappe à carburant comprenant un bol pouvant être fermé par une porte montée pivotante par l'intermédiaire d'une charnière en col de cygne. L'agencement comporte également des moyens de rappel et un système de crémaillère permettant d'amortir le mouvement d'ouverture de la porte. La publication DE-U-29710918 décrit quant à elle un agencement de trappe du même type dans lequel l'amortissement de l'ouverture de la porte est assuré par un amortisseur à fluide. Cependant, ces agencements présentent tous les deux l'inconvénient d'être complexes et encombrants, ce qui peut induire un montage long et compliqué ainsi que des coûts importants.

Le document JP-A-2005319960 divulgue un agencement de trappe à carburant selon le préambule de la revendication 1. Les moyens d'amortissement consistent en des éléments saillants qui sont disposés de part et d'autre du coude de la charnière et qui sont apte à coopérer, lors du passage de la porte dans sa position d'ouverture, avec des parties saillantes du bord latéral du bol par friction.

Afin de pallier ces inconvénients, l'invention a pour objet l'invention un agencement de trappe à carburant simple et économique.

A cet effet, l'invention propose un agencement d'une trappe à carburant du type cité ci-dessus, **caractérisé en ce que** qu'une extrémité de la première portion d'accrochage de la charnière reliée à l'axe comporte une lame souple apte à coopérer, lors du passage de la porte dans sa position d'ouverture, avec une première butée portée par une face interne du rebord du bol, de façon à amortir la course de l'ouverture de la porte et limiter l'effet de rebond occasionné par le contact entre la charnière et le rebord du bol en fin de course.

Selon d'autres caractéristiques de l'invention:
- La lame souple est apte à occuper une première configuration de repos à distance de la première butée, lorsque la porte est en position fermée et une deuxième configuration fléchie en appui contre la première butée, de manière à absorber le choc de la charnière contre le rebord du bol lorsque la porte passe en position ouverte.
- La lame souple est moulée d'une pièce avec la charnière.
- La lame souple est une pièce rapportée.
- La première butée est moulée d'une pièce avec le bol.
- L'extrémité du rebord de la cavité du bol comporte en outre une deuxième butée élastique apte à coopérer avec la première portion d'accrochage de la charnière de façon à amortir le contact entre la charnière et le rebord du bol en fin de course.
- La deuxième butée élastique s'étend selon un plan parallèle au plan de la carrosserie.
- La deuxième butée est surmoulée sur le rebord du bol

D'autres caractéristiques et avantages de l'invention apparaîtront à la lecture de la description d'exemples de réalisation d'une trappe à carburant en référence aux dessins annexés dans lesquels :
- La figure 1 est une vue schématique de dessus en coupe d'un agencement d'une trappe à carburant selon l'invention, la porte de la trappe étant représentée en position fermée.
- La figure 2 est une vue de l'agencement de la figure 1, la porte étant en position ouverte.
- La figure 3 est une vue d'un détail de l'agencement de la figure 1, la porte étant en position fermée.
- La figure 4 est une vue du détail de la figure 3, la porte étant en position ouverte.

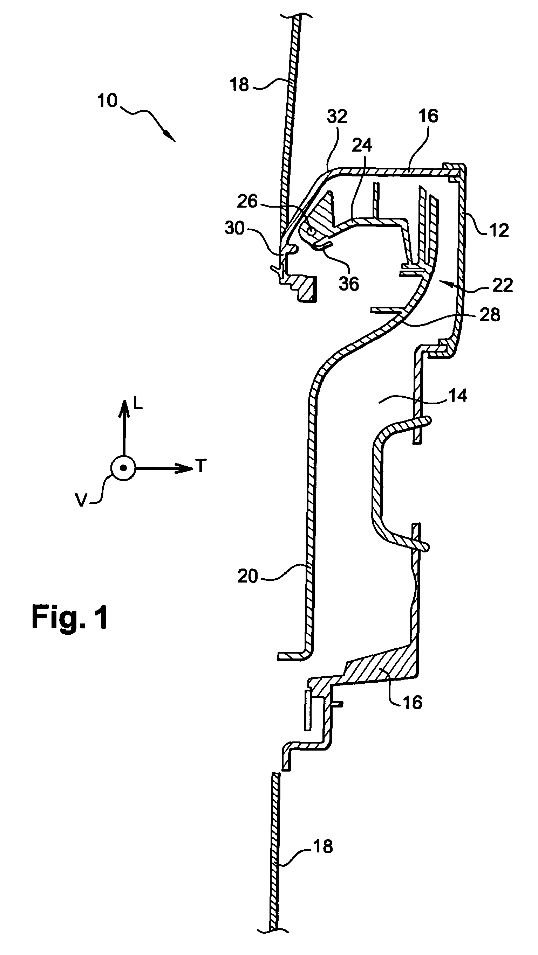

Dans la description qui suit, nous prendrons à titre non limitatif une orientation longitudinale, verticale et transversale indiquée par le trièdre L,V,T des figures 1 à 4.

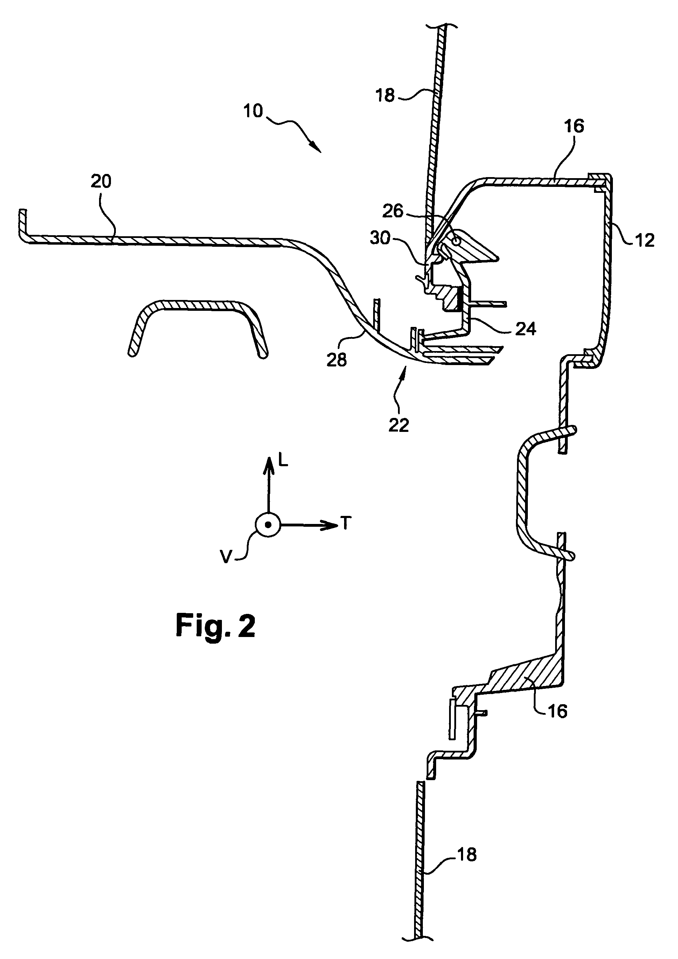

Tel que représenté aux figures 1 et 2, une trappe à carburant 10 comporte un bol 12 présentant une cavité 14 délimitée par des parois latérales 16 et débouchant dans un panneau de carrosserie 18. La cavité 14 donne accès à des moyens de remplissage (non représentés) d'un réservoir (non représenté) du véhicule.

Une porte 20 est montée pivotante par l'intermédiaire d'une charnière 22 en col de cygne. La charnière 22, qui forme un coude, comporte une première portion d'accrochage 24 montée à pivotement autour d'un axe vertical 26 et s'étendant selon une direction sensiblement perpendiculaire au plan de la carrosserie 18, et comporte une deuxième portion 28 qui est reliée à un bord de la porte 20.

Lorsque la porte 20 est en position fermée, la charnière 22 se trouve à l'intérieur de la cavité 14, sous un rebord 30 de la cavité 12 qui s'étend, depuis un bord libre 32 de la paroi latérale 16, vers l'intérieur de la cavité 14.

La porte 20 se situe alors dans le prolongement du plan formé par le panneau de carrosserie 18, c'est-à-dire sensiblement dans un plan formé par les axes V et L.

Des moyens de rappel (non représentés) tels qu'un ressort, par exemple, permettent de maintenir la porte 20 plaquée en position de fermeture de façon à assurer l'étanchéité entre le bol 12 et la porte 20 mais aussi de manière à assurer l'alignement de la surface de la porte 20 et de la surface du panneau de carrosserie 18, et permettent également l'ouverture de la porte 20.

Sous l'action des moyens de rappel, la porte 20 peut passer de sa position fermée à une position ouverte par un pivotement autour de l'axe 26.

En position d'ouverture, la porte 20 se trouve dans un plan sensiblement perpendiculaire au plan de la carrosserie de manière à dégager l'accès à la cavité 14.

La charnière 22 se situe alors en partie en dehors de la cavité 12, la première portion d'accrochage 24 de la charnière 22 étant sensiblement parallèle au plan de la carrosserie 18.

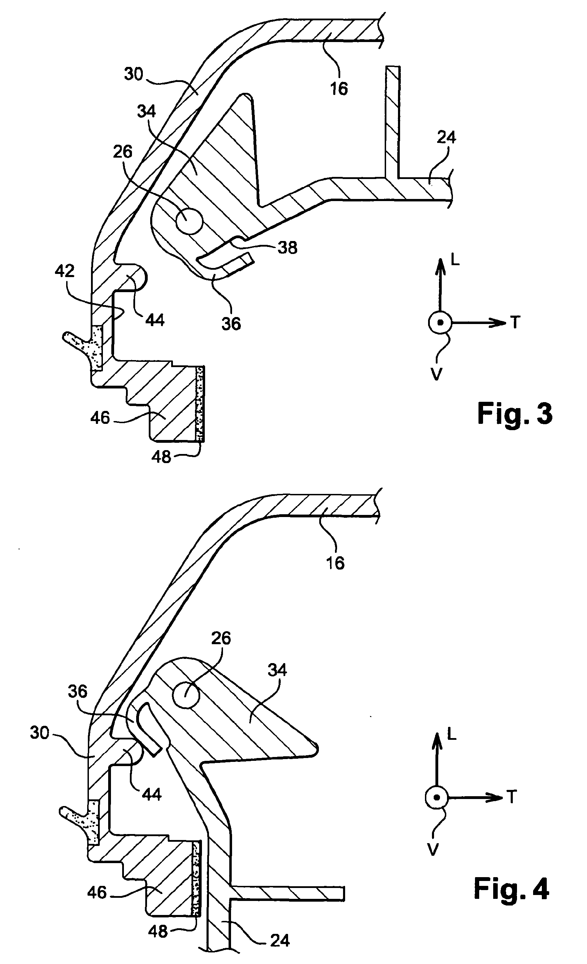

Tel que représenté aux figures 3 et 4, une extrémité 34 de la première portion d'accrochage 24 de la charnière 22, qui est montée sur l'axe 26, comporte une lame souple 36.

La lame souple 36 peut être de préférence moulée avec la charnière 22, ou bien rapportée.

La lame souple 36 s'étend depuis l'extrémité 34, le long d'une face interne 38 de la première portion d'accrochage 24, de manière qu'elle se trouve à l'intérieur du coude formée par la charnière 22. Une extrémité libre 40 de la lame souple 36 est ainsi dirigée vers le coude formé par la charnière 22.

Une face interne 42 du rebord 30 du bol comporte une butée 44, qui s'étend selon une direction sensiblement perpendiculaire au plan de la carrosserie. La butée 44 est située en regard de la lame souple 36.

Ainsi, lorsque la porte 20 de la trappe 10 est en position fermée, la lame souple 36, en position de repos, se trouve à distance de la butée 44.

Lorsque la porte 20 passe de sa position fermée à sa position ouverte, la lame souple 36 se rapproche de la butée 44 puis entre en contact avec cette dernière.

Au contact de la butée 44, la lame souple 36 se déforme et passe en position fléchie, ce qui permet lors de l'ouverture de la porte, d'absorber l'énergie du choc de la charnière 22 contre le rebord et ainsi d'éviter un effet de rebond de ladite porte 20.

En outre, le rebord 32 comporte une partie 46 s'étendant vers l'intérieur de la cavité 14, selon une direction sensiblement perpendiculaire au plan de la carrosserie.

La partie 46 du rebord comporte une deuxième butée 48, en matière élastique de préférence surmoulée ou bien collée ou clippée par exemple.

Ainsi, lorsque la porte 20 passe en position ouverte, la première portion d'accrochage 24 de la charnière 22 entre en contact avec la deuxième butée élastique 48, ce qui limite la production de bruits.

## Revendications

1. Agencement d'une trappe à carburant (10) de véhicule automobile, comprenant un bol (12) formant une cavité (14), et une porte (20) comportant une charnière (22) formant un coude dont une première portion d'accrochage (24) est montée pivotante autour d'un axe (26), la porte (20) étant apte à occuper :
- une position fermée dans laquelle la porte (20) occulte la cavité (14) du bol (12) et se trouve dans l'alignement d'un plan de carrosserie (18) du véhicule, la charnière (22) se trouvant alors à l'intérieur de la cavité (14), et,
- une position ouverte dans laquelle la cavité (14) du bol (12) est découverte, la première portion d'accrochage (24) de la charnière (22) se trouvant alors à l'intérieur de la cavité (14) et étant en contact avec un rebord (30) de la cavité (14) du bol (12),
des moyens de rappel permettant l'ouverture de la porte et le plaquage de la porte en position fermée,
**caractérisé en ce qu'**une extrémité (34) de la première portion d'accrochage (24) de la charnière (22) reliée à l'axe (26) comporte une lame souple (36) apte à coopérer, lors du passage de la porte (20) dans sa position d'ouverture, avec une première butée (44) portée par une face interne (42) du rebord (30) du bol (12), de façon à amortir la course de l'ouverture de la porte (20) et limiter l'effet de rebond occasionné par le contact entre la charnière (22) et le rebord (30) du bol (12) en fin de course.

2. Agencement d'une trappe à carburant (10) selon la revendication 1, **caractérisé en ce que** la lame souple (36) est apte à occuper une première configuration de repos à distance de la première butée (44), lorsque la porte (20) est en position fermée et une deuxième configuration fléchie en appui contre la première butée (44), de manière à absorber le choc de la charnière (22) contre le rebord (30) du bol (12) lorsque la porte (20) passe en position ouverte.

3. Agencement d'une trappe à carburant (10) selon la revendication 1, **caractérisé en ce que** la lame souple (36) est moulée d'une pièce avec la charnière (22).

4. Agencement d'une trappe à carburant (10) selon la revendication 1, **caractérisé en ce que** la lame souple (36) est une pièce rapportée.

5. Agencement d'une trappe à carburant (10) selon l'une quelconque des revendications précédentes, **caractérisé en ce que** la première butée (44) est moulée d'une pièce avec le bol (12).

6. Agencement d'une trappe à carburant (10) selon la revendication précédente, **caractérisé en ce que** l'extrémité (46) du rebord (30) de la cavité du bol comporte en outre une deuxième butée élastique (48) apte à coopérer avec la première portion d'accrochage (24) de la charnière (22) de façon à amortir le contact entre la charnière (22) et le rebord (30) du bol (12) en fin de course.

7. Agencement d'une trappe à carburant (10) selon la revendication précédente, **caractérisé en ce que** la deuxième butée élastique (48) s'étend selon un plan sensiblement parallèle au plan la carrosserie (18).

8. Agencement d'une trappe à carburant (10) selon la revendication précédente, **caractérisé en ce que** la deuxième butée (48) est surmoulée sur le rebord (30) du bol (12).

## Claims

1. Fuel door arrangement (10) for an automobile comprising a bowl (12) forming a cavity (14) and a door (20) comprising a hinge (22) forming an elbow of which a first hooking portion (24) is mounted pivotably about a pin (26), the door (20) being capable of occupying:
- a closed position in which the door (20) occludes the cavity (14) of the bowl (12) and is located in alignment with a bodywork plane (18) of the vehicle, the hinge (22) thus being located inside the cavity (14), and
- an open position in which the cavity (14) of the bowl (12) is exposed, the first hooking portion (24) of the hinge (22) thus being located inside the cavity (14) and being in contact with an edge (30) of the cavity (14) of the bowl (12),
return means permitting the opening of the door and the pushing of the door in the closed position, **characterized in that** one end (34) of the first hooking portion (24) of the hinge (22) connected to the pin (26) comprises a flexible strip (36) capable, during the passage of the door (20) into its open position, of cooperating with a first stop (44) carried by an internal face (42) of the edge (30) of the bowl (12) so as to dampen the path of the opening of the door (20) and limit the rebound effect caused by the contact between the hinge (22) and the edge (30) of the bowl (12) at the end of travel.

2. Fuel door arrangement (10) according to Claim 1, **characterized in that** the flexible strip (36) is capable of occupying a first resting configuration remote from the first stop (44), when the door (20) is in the closed position and a second flexed configuration in abutment against the first stop (44) so as to absorb the impact of the hinge (22) against the edge (30) of the bowl (12) when the door (20) passes into the open position.

3. Fuel door arrangement (10) according to Claim 1, **characterized in that** the flexible strip (36) is moulded in one piece with the hinge (22).

4. Fuel door arrangement (10) according to Claim 1, **characterized in that** the flexible strip (36) is an attached part.

5. Fuel door arrangement (10) according to any one of the preceding claims, **characterized in that** the first stop (44) is moulded in one piece with the bowl (12) .

6. Fuel door arrangement (10) according to the preceding claim, **characterized in that** the end (46) of the edge (30) of the cavity of the bowl further comprises a second resilient stop (48) capable of cooperating with the first hooking portion (24) of the hinge (22) so as to dampen the contact between the hinge (22) and the edge (30) of the bowl (12) at the end of travel.

7. Fuel door arrangement (10) according to the preceding claim, **characterized in that** the second resilient stop (48) extends along a plane substantially parallel to the plane of the bodywork (18).

8. Fuel door arrangement (10) according to the preceding claim, **characterized in that** the second stop (48) is overmoulded on the edge (30) of the bowl (12).

## Patentansprüche

1. Anordnung einer Tankklappe (10) eines Kraftfahrzeugs, die eine einen Hohlraum (14) formenden Schale (12) und eine Tür (20) enthält, die ein Scharnier (22) aufweist, das ein Kniestück bildet, von dem ein erster Befestigungsteil (24) um eine Achse (26) schwenkbar montiert ist, wobei die Tür (20) einnehmen kann:
- eine geschlossene Stellung, in der die Tür (20) den Hohlraum (14) der Schale (12) verdeckt und sich in Flucht mit einer Karosserieebene (18) des Fahrzeugs befindet, wobei das Scharnier (22) sich dann im Inneren des Hohlraums (14) befindet, und
- eine offene Stellung, in der der Hohlraum (14) der Schale (12) aufgedeckt ist, wobei der erste Befestigungsteil (24) des Scharniers (22) sich dann im Inneren des Hohlraums (14) befindet und mit einer Randleiste (30) des Hohlraums (14) der Schale (12) in Kontakt steht,
wobei Rückstelleinrichtungen das Öffnen der Tür und das Andrücken der Tür in die geschlossene Stellung erlauben,
**dadurch gekennzeichnet, dass** ein mit der Achse (26) verbundenes Ende (34) des ersten Befestigungsteils (24) des Scharniers (22) eine biegsame Lamelle (36) aufweist, die beim Übergang der Tür (20) in ihre Öffnungsstellung mit einem ersten Anschlag (44) zusammenwirken kann, der von einer Innenseite (42) der Randleiste (30) der Schale (12) getragen wird, um die Hubbewegung der Öffnung der Tür (20) zu dämpfen und die Rückprallwirkung zu begrenzen, die durch den Kontakt zwischen dem Scharnier (22) und der Randleiste (30) der Schale (12) in der Endstellung verursacht wird.

2. Anordnung einer Tankklappe (10) nach Anspruch 1, **dadurch gekennzeichnet, dass** die biegsame Lamelle (36) eine erste Ruhekonfiguration in Abstand zum ersten Anschlag (44), wenn die Tür (20) in der geschlossenen Stellung ist, und eine zweite gebogene Konfiguration in Auflage gegen den ersten Anschlag (44) einnehmen kann, um den Stoß des Scharniers (22) gegen die Randleiste (30) der Schale (12) zu absorbieren, wenn die Tür (20) in die offene Stellung übergeht.

3. Anordnung einer Tankklappe (10) nach Anspruch 1, **dadurch gekennzeichnet, dass** die biegsame Lamelle (36) aus einem Stück mit dem Scharnier (22) geformt ist.

4. Anordnung einer Tankklappe (10) nach Anspruch 1, **dadurch gekennzeichnet, dass** die biegsame Lamelle (36) ein angesetztes Bauteil ist.

5. Anordnung einer Tankklappe (10) nach einem der vorhergehenden Ansprüche, **dadurch gekennzeichnet, dass** der erste Anschlag (44) aus einem Stück mit der Schale (12) geformt ist.

6. Anordnung einer Tankklappe (10) nach dem vorhergehenden Anspruch, **dadurch gekennzeichnet, dass** das Ende (46) der Randleiste (30) des Hohlraums der Schale außerdem einen zweiten elastischen Anschlag (48) aufweist, der mit dem ersten Befestigungsteil (24) des Scharniers (22) so zusammenwirken kann, dass er den Kontakt zwischen dem Scharnier (22) und der Randleiste (30) der Schale (12) in der Endstellung dämpft.

7. Anordnung einer Tankklappe (10) nach dem vorhergehenden Anspruch, **dadurch gekennzeichnet, dass** der zweite elastische Anschlag (48) sich in einer im Wesentlichen zur Ebene der Karosserie (18) parallelen Ebene erstreckt.

8. Anordnung einer Tankklappe (10) nach dem vorhergehenden Anspruch, **dadurch gekennzeichnet, dass** der zweite Anschlag (48) auf die Randleiste (30) der Schale (12) aufgeformt wird.
